# EUROPÄISCHE PATENTSCHRIFT

(11) **EP 2 577 620 B1**
(45) Veröffentlichungstag und Bekanntmachung des Hinweises auf die Patenterteilung: **14.05.2014**
(21) Anmeldenummer: 11724124.0
(22) Anmeldetag: 26.05.2011
(51) Int. Cl.: G07D 7/12, G07D 7/20, G01J 1/42

(54) **VORRICHTUNG ZUR ECHTHEITSPRÜFUNG VON WERTDOKUMENTEN**
DEVICE FOR TESTING THE AUTHENTICITY OF VALUABLE DOCUMENTS
DISPOSITIF DE CONTRÔLE DE L'AUTHENTICITÉ DE DOCUMENTS DE VALEUR

(30) Priorität: 27.05.2010 DE 102010021803
(43) Veröffentlichungstag der Anmeldung: 10.04.2013
(73) Patentinhaber: Giesecke & Devrient GmbH, 81677 München (DE)
(72) Erfinder: HOLL, Norbert, 82110 Germering (DE); STEIN, Dieter, 83607 Holzkirchen (DE); SU, Shanchuan, 85579 Neubiberg (DE)
(86) Internationale Anmeldenummer: PCT/EP2011/002615
(87) Internationale Veröffentlichungsnummer: WO 2011/147575

(56) Entgegenhaltungen:
- EP-A1- 1 818 876
- WO-A1-2008/149051
- WO-A1-2009/133332
- DE-A1-102007 015 484
- DE-A1-102007 019 107

## Beschreibung

Die vorliegende Erfindung betrifft ein Verfahren zum Prüfen der Echtheit eines Wertdokuments, eine entsprechende Vorrichtung zur Echtheitsprüfung von Wertdokumenten sowie eine Bearbeitungseinrichtung für Wertdokumente.

So genannte "Composed"-Fälschungen von Wertdokumenten sind aus mehreren Teilen zusammengesetzt, z.B. aus einem oder mehreren echten Dokumentteilen und/oder einem oder mehreren gefälschten Dokumentteilen. Zum Erkennen solcher Fälschungen sind verschiedene Verfahren bekannt, z.B. die Auswertung der Reflektion des Wertdokuments, um Klebestreifen oder anderweitige Verbindungen der einzelnen Dokumentteile anhand von Reflektionseigenschaften zu erkennen. Dies ist jedoch nicht bei sämtlichen Klebestreifen oder -verbindungen möglich, sondern nur bei solchen mit erkennbar gegenüber dem Restdokument abweichenden Reflektionseigenschaften. Ferner können Fluoreszenzeigenschaften einer Composed-Fälschung zur Erkennung herangezogen werden, wenn die einzelnen Dokumentteile auf unterschiedlichen (Papier-) Substraten basieren, oder die Position und/oder Orientierung optisch erkennbarer Merkmale einer Composed-Fälschung zur Erkennung von optischen Brüchen in den Aufdrucken des gefälschten Wertdokuments dienen. Jedoch können durch diese Verfahren nicht alle Composed-Fälschung zuverlässig erkannt werden.

Beispiele solcher und ähnlicher Verfahren sind der DE 10 2007015489, der WO 2008/149051, der WO 2009/133332 und der DE 10 2007019107 zu entnehmen.

Der Erfindung liegt folglich die Aufgabe zu Grunde, eine Verfahren anzugeben, durch das Composed-Fälschungen möglichst zuverlässig erkannt werden können.

Diese Aufgabe wird durch Verfahren und Vorrichtungen mit den Merkmalen der unabhängigen Ansprüche gelöst. In davon abhängigen Ansprüchen sind vorteilhafte Ausgestaltungen und Weiterbildungen der Erfindung angegeben.

Bei einem Verfahren zum Prüfen der Echtheit eines Wertdokuments wird zumindest eine Intensitätsverteilung von durch das Wertdokument hindurchtretender elektromagnetischer Strahlung erfasst und ausgewertet. Erfindungsgemäß wird die zumindest eine Intensitätsverteilung ortsaufgelöst im Dunkelfeld erfasst und daraus eine ortsaufgelöste Dunkelfeldcharakteristik bestimmt, welche beispielsweise einem digitalen Intensitätsbild des Wertdokuments in einem gewünschten Spektralbereich entsprechen kann.

Anschließend werden geeignete Prüfungsteilbereiche des Wertdokuments ausgewählt und aus den zugehörigen Ausschnitten der Dunkelfeldcharakteristik jeweils ein individueller charakteristischer Intensitätswert abgeleitet, welcher mit zumindest einem oberen und/oder unteren Schwellenwert verglichen wird. Abhängig von diesen Vergleichen werden die Prüfungsteilbereiche jeweils einer von mehreren vorgegebenen Verdachtsklassen zugeordnet bzw. hinsichtlich der Verdachtsklassen klassifiziert. Aus denjenigen Prüfungsteilbereichen, die zumindest einer bestimmten Verdachtsklasse zugeordnet wurden, beispielsweise einer auf eine Fälschung hindeutenden Verdachtsklasse, wird ein Zusammenhangsbereich gebildet, indem die im Wesentlichen zusammenhängenden Prüfungsteilbereiche der betreffenden Verdachtsklasse miteinander verbunden werden. Hierbei ist unter im Wesentlichen zusammenhängende Prüfungsteilbereichen ein hinreichend nahes Beieinanderliegen der Prüfungsteilbereiche zu verstehen, selbst wenn diese keine direkt aneinander angrenzenden Pixel in dem digitalen Intensitätsbild des Wertdokuments aufweisen.

Weiter wird das Wertdokument in Abhängigkeit von der Lage des Zusammenhangsbereichs innerhalb des Wertdokuments, und ggf. auch in Abhängigkeit von dessen Form, einer von zumindest zwei vorgegebenen Echtheitskategorien zugeordnet, welche mit derjenigen zumindest einen bestimmten Verdachtsklassen verknüpft ist, welcher die den Zusammenhangsbereich bildenden Prüfungsteilbereiche zugeordnet wurden.

Eine erfindungsgemäße Vorrichtung zur Echtheitsprüfung von Wertdokumenten umfasst entsprechend eine Erfassungseinrichtung und eine Auswerteeinrichtung zum Erfassen und Auswerten von durch das Wertdokument hindurchtreterider elektromagnetischer Strahlung. Hierbei umfasst die Erfassungseinrichtung eine Dunkelfeldtransmissionsrriesseinrichtung, mit welcher zumindest eine Intensitätsverteilung der durch das zu prüfende Wertdokument hindurchtretenden elektromagnetischen Strahlung ortsaufgelöst im Dunkelfeld erfasst wird. Die Auswertungseinrichtung bildet dann aus der erfassten Intensitätsverteilung die ortsaufgelöste Dunkelfeldcharakteristik des Wertdokuments und ordnet ausgewählte Prüfungsteilbereiche des Wertdokuments mittels des oben beschriebenen Schwellenwertvergleichs jeweils einer von mehreren vorgegebenen Verdachtsklassen zu, bildet aus den im Wesentlichen zusammenhängenden Prüfungsteilbereichen einen Zusammenhangsbereich und ordnet schließlich das Wertdokument abhängig von der Lage, und ggf. auch von der Form, des Zusammenhangsbereichs einer Echtheitskategorie zu.

Eine Bearbeitungseinrichtung für Wertdokumente, in welche eine erfindungsgemäße Vorrichtung zur Echtheitsprüfung integriert ist, ist neben der Prüfung auf Echtheit vorzugsweise auch dazu ausgestaltet, Wertdokumente dahingehend zu verarbeiten, dass die Wertdokumente nach der Wertdokumentart sortiert und/ oder auf ihre Umlauffähigkeit geprüft werden.

Vorzugsweise werden diejenigen Prüfungsteilbereiche zu einem Zusammenhangsbereich zusammengefasst, die einer auf eine Fälschung des Wertdokuments hindeutenden Verdachtsklasse zugeordnet wurden. Anhand dieses Zusammenhangsbereichs wird das Wertdokument einer gefälschte Wertdokumente betreffenden Echtheitskategorie zugeordnet, sofern der Zusammenhangsbereichs eine für gefälschte Wertdokumente typische Lage innerhalb des Wertdokuments aufweist.

Das Erkennen der gefälschten Banknoten basiert also auf einem zweistufigen Erkennungsverfahren, welches in einer ersten Stufe verdächtige Prüfungsteilbereiche des Wertdokuments ermittelt und in einer zweiten Stufe prüft, ob ein aus den verdächtigen Prüfungsteilbereichen gebildeter Zusammenhangsbereich hinsichtlich Lage auf eine Fälschung schließen lässt.

Bei der erfindungsgemäßen Dunkelfeldtransmissionsmessung wird die Strahlungsintensität der durch das zu prüfende Wertdokument hindurchtretenden Strahlung gemessen, wobei aber der Anteil der Strahlung, der durch das Wertdokument im Wesentlichen geradlinig hindurch tritt, nicht oder nur in einem vernachlässigbaren Umfang zu dem Messergebnis der Dunkelfeldtransmissionsmessung beiträgt. Vielmehr trägt im Wesentlichen nur die in ihrer Ausbreitungsrichtung stark abgelenkte Strahlung zum Messergebnis der Dunkelfeldtransmission bei. Aus diesem Grund rufen bei einer Dunkelfeldtransmissionsmessung auch Teilbereiche und vor allem Trennlinien einer Composed-Fälschung besonders auffällige Messergebnisse hervor, die z.B. mittels einer Hellfeldtransmissionsmessung nicht erkennbar wären, bei der vor allem geradlinig oder zumindest im Wesentlichen geradlinig durch das Wertdokument hindurchtretende Strahlung gemessen wird.

Im Vergleich zur Hellfeldtransmissionsmessung ist der Einsatz der Dunkelfeldtransmissionsmessung von großem Vorteil, da die Dunkelfeldtransmissionmessung besonders aussagefähige digitale Intensitätsbilder als Grundlage für das weitere Verfahren liefert. Hierbei kann insbesondere an den z.B. mit einem Kleber versehenen Trennlinien zwischen zwei Dokumentteilen bzw. an den dort aufgebrachten Klebestreifen oder anderweitigen Klebeverbindungen ein Intensitätsverlauf von gestreuter (d.h. im Dunkelfeld gemessener) Strahlung zu erkennen sein, der sich signifikant von demjenigen innerhalb der Dokumentteile einer Composed-Fälschung unterscheidet. Die im Dunkelfeld gemessene (gestreute) Strahlung nimmt dabei einen anderen Intensitätsverlauf als im Hellfeld an, weil das Verhältnis zwischen geradliniger Transmission und Streuung bei einem Kleber oder Klebestreifen in der Regel ein völlig anderes ist als bei den Dokumentteilen selbst.

Es ist ein wesentlicher Vorteil der Erfindung, dass mit der Lage des Zusammengangsbereichs bei der Auswertung der Dunkelfeldcharakteristik ein morphologisches Kriterium berücksichtigt wird, welches eines globale Beurteilung des betreffende Wertdokuments erlaubt. Die bei der Dunkelfeldtransmission gemessenen deutlichen Intensitätsvariationen an den Trennlinien ermöglichen hierbei besonders zuverlässige und stabile Ergebnisse des beschriebenen Erkennungsverfahrens.

Bei den ausgewählten Prüfungsteilbereichen des Wertdokuments kann es sich z.B. um Teilbereiche des Wertdokuments handeln, die aus einzelnen Pixeln, Pixelgruppen oder größerflächigen Rasterbereichen der Dunkelfeldcharakteristik bestehen. Beim Zuordnen der ausgewählten Prüfungsteilbereiche des Wertdokuments zu einer oder mehreren Verdachtsklassen wird ein charakteristischer Intensitätswert der Dunkelfeldcharakteristik des jeweiligen Prüfungsteilbereichs mit dem oberen und/oder unteren Schwellenwert verglichen. Hierbei kann der charakteristische Intensitätswert der betreffenden Dunkelfeldcharakteristik beispielsweise ein Mittelwert oder Medianwert der einzelnen Intensitätswerte sein. Falls die Dunkelfeldcharakteristik lediglich ein Pixel umfasst, kann dessen Intensitätswert als charakteristischer Intensitätswert der Dunkelfeldcharakteristik herangezogen werden. Der Vergleich des charakteristischen Intensitätswerts mit dem Schwellenwert ist vorzugsweise ein Größer-Keiner-Vergleich. Die Verdachtsklassen können hierbei abgestufte Wahrscheinlichkeiten für das Vorliegen einer Fälschung betreffen, z.B. "höchstwahrscheinlich gefälscht", "vermutlich gefälscht", "unbekannt", "vermutlich echt", "höchstwahrscheinlich echt", oder dergleichen.

Zum Bilden der Zusammenhangsbereiche werden Kriterien hinsichtlich derjenigen Verdachtsklassen vorgegeben, aus denen Prüfungsteilbereiche in den Zusammenhangsbereich eingehen und wann diese als im Wesentlichen zusammenhängend betrachtet werden. Zum Beispiel kann der Zusammenhangsbereich aus benachbarten Prüfungsteilbereichen der Verdachtsklassen "höchstwahrscheinlich gefälscht" und "vermutlich gefälscht" gebildet werden.

Der Begriff der elektromagnetischen Strahlung umfasst vorliegend Licht im sichtbaren Spektralbereich oder Strahlung im Infrarotbereich oder im Ultraviolettbereich. Entsprechend wird die Intensitätsverteilung des zu prüfenden Wertdokuments im Infrarotbereich, im sichtbaren Spektralbereich oder im Ultraviolettbereich erfasst, wobei auch beliebige Kombinationen dieser drei Spektralbereiche denkbar sind. Zum Beispiel lassen sich besonders gute Erkennungsergebnisse bei einer Erfassung von Intensitätsverteilungen im Infrarotbereich und/ oder im grünen sichtbaren Spektralbereich erzielen. Hierbei hängt die Stärke der durch das Material eines Klebers, Klebebands oder einer anderweitigen Klebeverbindung hervorgerufenen Streuung der elektromagnetischen Strahlung von deren Wellenlänge ab. In der Regel gibt es einen optimalen Spektralbereich, der bei den Trennlinien einer Composed-Fälschung mittels Dunkelfeldtransmissionsmessung besonders deutliche Ergebnisse liefert. Dieser optimale Spektralbereich kann experimentell oder mittels numerischer Simulationsrechnungen bestimmt werden.

Gemäß einer bevorzugten Ausführungsform wird in mehreren Spektralbereichen jeweils eine Intensitätsverteilung erfasst und die ortsaufgelöste Dunkelfeldcharakteristik aus den erfassten Intensitätsverteilungen bestimmt, indem einander örtlich entsprechende Werte der Intensitätsverteilungen verschiedener Spektralbereiche miteinander verknüpft werden. Dabei hat sich insbesondere eine gewichtete, ortsabhängige Verknüpfung als vorteilhaft erwiesen, d.h. eine Verknüpfung bei der die Intensitätswerte verschiedener Spektralbereiche mit Gewichtungsfaktoren versehen und miteinander geeignet verknüpft werden, z.B. additiv oder multiplikativ. Andere Verknüpfungen, wie z.B. subtraktive oder divisive Verknüpfungen, können abhängig von der jeweiligen Composed-Fälschung und den gewählten Spektralbereichen ebenso in Frage kommen. Es hat sich gezeigt, dass es zur sicheren Erkennung von Trennlinien besonders vorteilhaft ist, jeweils eine Intensitätsverteilung im Infrarotbereich und im grünen sichtbaren Spektralbereich zu erfassen, um daraus die ortsaufgelösten Dunkelfeldcharakteristik durch örtliche (evtl. gewichtete) Mittelwertbildung der beiden Intensitätsverteilungen zu bestimmen. Im einfachsten Fall ist die Dunkelfeldcharakteristik jedoch gleich der ortsaufgelöst erfassten Intensitätsverteilung der elektromagnetischen Strahlung eines einzelnen Spektralbereichs.

Die ausgewählten Prüfungsteilbereiche des Wertdokuments können in Abhängigkeit von lokalen und/oder globalen Schwellenwerten einer Verdachtsklasse zugeordnet werden. Es können also auch Schwellenwerte verwendet werden, die nur für bestimmte, lokale Bereiche des zu prüfenden Wertdokuments gültig sind, z.B. nur für die ausgewählten Prüfungsteilbereiche selbst. Lokale Schwellenwerte werden vorzugsweise dann eingesetzt, wenn die Dunkelfeldtransmission eines ungefälschten Wertdokuments lokal stark variierende Intensitätswerte annimmt (z.B. durch Sicherheitselemente, Bedruckungen, oder dergleichen).

Vorzugsweise werden die Schwellenwerte in Abhängigkeit von einem oder mehreren Bezugsteilbereichen des Wertdokuments festgelegt bzw. aus diesen abgeleitet. Alternativ oder zusätzlich können die Schwellenwerte auch aus vorgegebenen Standardschwellenwerten abgeleitet werden, welche z.B. anhand einer Vielzahl von ungefälschten Standardwertdokumenten bestimmt wurden.

Bei den Bezugsteilbereichen, aus denen lokale oder globale Schwellenwerte abgeleitet werden, kann es sich um beliebige Teilbereiche des zu prüfenden Wertdokuments handeln, die möglichst sicher keine Anteile einer Trennlinie umfassen, so dass geeignete Schwellenwerte ermittelt werden können, gegenüber denen die Intensitätswerte einer Trennlinie auffällig über- oder unterschwellig sind. Insbesondere kann es sich bei den Bezugsteilbereichen analog zu den zuvor beschriebenen Prüfungsteilbereichen um einzelne Pixel, eine Gruppe von benachbarten Pixeln oder größerflächige Rasterbereiche der Dunkelfeldcharakteristik handeln. Vorzugsweise sind die Bezugsteilbereiche, aus denen lokale Schwellenwerte abgeleitet werden, und die Prüfungsteilbereiche, die anhand der lokalen Schwellenwerte geprüft werden, nur geringfügig beabstandet.

Zum Festlegen der Schwellenwerte werden vorzugsweise charakteristische Intensitätswerte der Dunkelfeldcharakteristiken verschiedener Bezugsteilbereiche des Wertdokuments arithmetisch miteinander verknüpft. Die charakteristischen Intensitätswerte der Dunkelfeldcharakteristiken der Bezugsteilbereiche können hierbei analog zu den charakteristischen Intensitätswerten der Prüfungsteilbereiche bestimmt werden. Diese charakteristischen Werte der verschiedenen Bezugsteilbereiche können dann arithmetisch verknüpft werden (z.B. als Mittelwert, Median oder dergleichen), um daraus die benötigten Schwellenwerte abzuleiten.

Gemäß einer weiteren Ausführungsform werden die Schwellenwerte festgelegt, indem Standardschwellenwerte eines Standardwertdokuments korrigiert bzw. angepasst werden. Dabei wird ein Standardschwellenwert zur Bildung eines auf das vorliegende Wertdokument anwendbaren Schwellenwerts nach oben korrigiert, falls ein aus den Dunkelfeldcharakteristiken verschiedener Bezugsteilbereiche abgeleiteter charakteristischer Intensitätswert über einer Standardintensität des Standardwertdokuments liegt. Entsprechend wird ein Standardschwellenwert nach unten korrigiert, falls der aus den Dunkelfeldcharakteristiken verschiedener Bezugsteilbereiche abgeleitete charakteristische Intensitätswert unter einer Standardintensität des Standardwertdokuments liegt. Hierdurch können Standardschwellenwerte an die tatsächliche Dunkelfeldtransmission eines Wertdokuments angepasst werden, die insbesondere stark von dessen Gebrauchszustand abhängen kann. Zumindest eine der Verdachtsklassen ist eine auf eine Fälschung des Wertdokuments hindeutende Verdachtsklasse. Dementsprechend werden Prüfungsteilbereiche, deren charakteristischer Intensitätswert oberhalb eines oberen Schwellenwerts oder unterhalb eines unteren Schwellenwertes liegt, dieser Verdachtsklasse zugeordnet. Aus diesen Prüfungsteilbereichen wird schließlich der Zusammenhangsbereich gebildet.

Die Schwellenwerte werden dabei vorzugsweise so gewählt, dass einerseits bei Prüfungsteilbereichen, die im Bereich einer Trennlinie liegen, der charakteristische Intensitätswert der betreffenden Dunkelfeldcharakteristik über dem zuvor genannten oberen Schwellenwert oder unter dem zuvor genannten unteren Schwellenwert liegt, und dass andererseits bei Prüfungsteilbereichen, die im Bereich der Teildokumente bzw. deren Substrate liegen, der charakteristische Intensitätswert der betreffenden Dunkelfeldcharakteristik zwischen dem oberen und unteren Schwellenwert liegt. Die zuerst genannten Prüfungsteilbereiche werden dann einer Verdachtsklasse zugeordnet, die auf eine Fälschung hindeutet, während letztere einer Verdachtsklasse zugeordnet werden, die auf ein ungefälschtes, echtes Wertdokument hindeutet. Sofern hinsichtlich der Fälschungswahrscheinlichkeit weiter abgestufte Verdachtsklassen existieren, werden entsprechende weitere Schwellenwerte benötigt, um diese Verdachtsklassen zu definieren.

Dabei wird zumindest ein Prüfungsteilbereich an einem Rand des Wertdokuments oder an einem Rand eines (vorher detektierten oder bekannten) Sicherheitselements des Wertdokuments ausgewählt, der zuvor einer auf eine Fälschung hindeutenden Verdachtsklasse zugeordnet wurde. Dann werden ausgehend von diesem Prüfungsteilbereich weitere mit diesem im Wesentlichen zusammenhängende Prüfungsteilbereiche ermittelt, die ebenfalls einer auf eine Fälschung hindeutenden Verdachtsklasse zuzuordnen sind. Schließlich werden alle auf diese Weise ermittelten Prüfungsteilbereiche zu einem Zusammenhangsbereich zusammengefasst, um das Wertdokument abhängig von Form und/ oder Lage des Zusammenhangsbereichs einer Echtheitskategorie zuzuordnen.

Erfindungsgemäß wird also die Tatsache ausgenutzt, dass Composed-Fälschungen typische Trennlinien zwischen zwei Randbereichen des Wertdokuments aufweisen bzw. ein Sicherheitselement umschließen. Zu deren Erkennung ist das beschriebene schrittweise Vorgehen insofern vorteilhaft, da nicht zunächst alle oder zumindest sehr viele Prüfungsteilbereiche einer Verdachtsklasse zugeordnet werden müssen, sondern lediglich ausgehend von einem auf eine Fälschung hindeutenden Prüfungsteilbereich am Rand des Dokuments mit diesem zusammenhängende Prüfungsteilbereiche geprüft werden. Auf diese Weise kann eine von Rand zu Rand verlaufende oder ein Sicherheitselement umschließende Trennlinie schrittweise rekonstruiert werden.

Entsprechend wird erfindungsgemäß bei der Auswertung der Lage des schrittweise ermittelten Zusammenhangsbereichs geprüft, ob dieser von einer Seite des Wertdokuments zu derselben Seite oder zu einer anderen Seite verläuft oder ein Sicherheitselement umschließt. Ein Wertdokument mit einem solchen Zusammenhangsbereich wird dann der Echtheitskategorie "Fälschung" zugeordnet. Hierbei kann neben der Lage des Zusammenhangsbereichs zusätzlich auch die Form des Zusammenhangsbereichs die Anzahl derjenigen Prüfungsteilbereiche berücksichtigt werden, welche einer auf eine Fälschung hindeutenden Verdachtsklasse zugeordnet wurden.

Vorzugsweise sind mehrere auf eine Fälschung hindeutende Verdachtsklassen vorgegeben, z.B. abgestuft nach Fälschungswahrscheinlichkeiten der Prüfungsteilbereiche. Die Klassifikation des Wertdokuments in eine Echtheitskategorie kann dann derart erfolgen, dass Prüfungsteilbereiche die einer Verdachtsklasse zugeordnet wurden, die mit großer Wahrscheinlichkeit auf eine Fälschung hindeutet, diese Klassifikation besonders stark beeinflussen.

Weitere Merkmale und Vorteile der Erfindung ergeben sich aus der folgenden Beschreibung der erfindungsgemäßen Ausführungsbeispiele sowie weiteren Ausführungsalternativen im Zusammenhang mit den Zeichnungen, die zeigen:
- Figur 1: eine Vorrichtung zur Echtheitsprüfung von Banknoten;
- Figur 2a: ein Beispiel einer Composed-Fälschung einer Banknote;
- Figur 2b: das Intensitätsprofil einer Dunkelfeldtransmission entlang einer Linie durch die Composed-Fälschung der Figur 2a;
- Figuren 3a bis 3f: beispielhafte Querschnitte durch Composed-Fälschungen, welche typische Formen von Trennlinien zwischen den Dokumentteilen von Composed-Fälschungen zeigen;
- Figur 4: ein Ablaufdiagramm eines Verfahrens zum Detektieren von Composed-Fälschungen;
- Figur 5: ein Histogramm zur Bestimmung von Schwellenwerten;
- Figuren 6a bis 6c: beispielhafte Verläufe von Trennlinien von Composed-Fälschungen; und
- Figur 7: ausgewählte Prüfungsteilbereiche gemäß einer besonderen Ausführungsform des Verfahrens der Figur 4.

Die nachfolgend beschriebenen erfindungsgemäßen Ausführungsbeispiele betreffen das Erkennen von Composed-Fälschungen von Banknoten, also die Zuordnung einer Banknote, welche aus echten und/ oder gefälschten Banknotenteilen zusammengesetzt wurde, zu einer Echtheitskategorie "Fälschung" oder "Composed-Fälschung". Neben Banknoten ist das Verfahren natürlich für beliebige andere Wertdokumente einsetzbar, z. B. Ausweise, amtliche Unterlagen, Aktien, Schuldverschreibungen oder dergleichen.

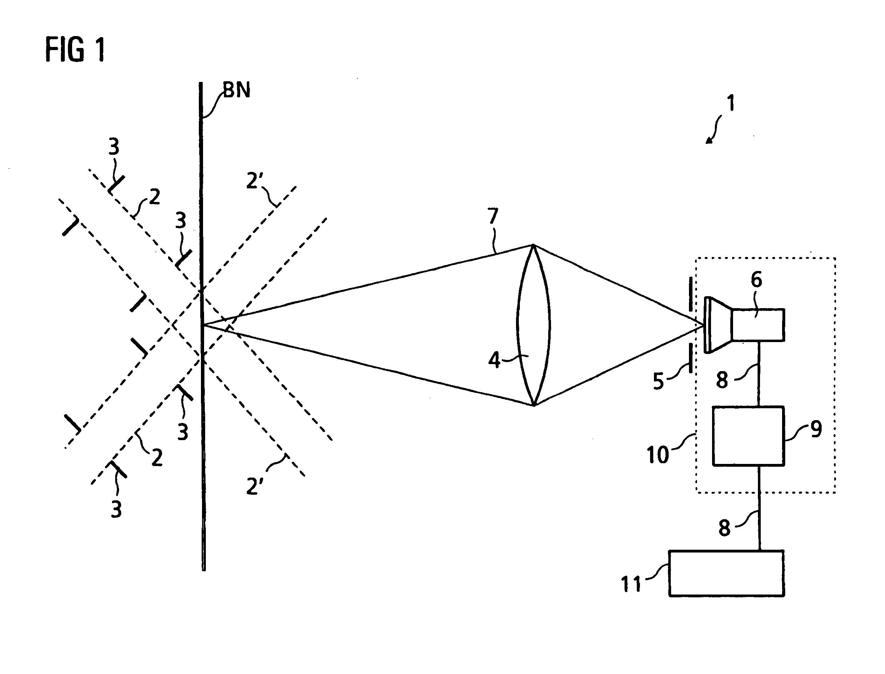

Figur 1 zeigt schematisch eine Vorrichtung 1 zur Echtheitsprüfung von Banknoten BN. Hierbei trifft durch Blenden 3 parallel kollimierte elektromagnetische Strahlung 2 auf die Banknote BN auf. Die in einer von der Richtung der einfallenden elektromagnetischen Strahlung 2 verschiedenen Richtung durch die Banknote BN hindurchtretende elektromagnetische Strahlung 7 wird mittels einer geeigneten Abbildungsoptik 4, 5, die vorliegend eine Linse 4 und eine Blende 5 umfasst, und einer Dunkelfeldtransmissionsmesseinrichtung 6 ortsaufgelöst im Dunkelfeld gemessen. Die Dunkelfeldtransmissionsmesseinrichtung 6 kann beispielsweise ein beliebiger geeigneter Detektor sein, z.B. eine Kamera, eine Zeilenkamera, ein CCD-Sensor oder dergleichen.

Bei der einfallenden elektromagnetischen Strahlung 2 handelt es sich insbesondere um weißes oder farbiges Licht im sichtbaren Spektralbereich, um UV-Strahlung im ultravioletten Spektralbereich oder um IR-Strahlung im infraroten Spektralbereich oder um Kombinationen dieser oder anderer Spektralbereiche.

Gemäß Fig.1 trifft die einfallende elektromagnetische Strahlung 2 schräg zur Normalen der Banknotenoberfläche auf die Banknote BN auf und wird als hindurchtretende Strahlung 7 in Richtung dieser Normalen detektiert, d.h. mit einer geeigneten Winkelabweichung gegenüber demjenigen Winkel, mit dem die elektromagnetische Strahlung 2 auf die Banknote BN auftrifft. Ebenso kann die elektromagnetische Strahlung 2 in Normalenrichtung (also senkrecht) auf die Banknote BN auftreffen und die hindurchtretende Strahlung 7 in einer von der Normalen verschiedenen Richtung (also schräg zur Banknote BN) detektiert werden. Auch ist es möglich, dass die elektromagnetische Strahlung 2 schräg zu der Normalen auf die Banknote BN auftrifft und die hindurchtretende Strahlung 7 in einer Richtung detektiert wird, die von der Normalen und von dem Winkel verschieden ist, in dem die elektromagnetische Strahlung 2 auf die Banknote BN auftrifft. Alle diese Varianten sind vorliegend als "Dunkelfeldtransmissionsmessung" zu verstehen.

Die Dunkelfeldtransmissionsmesseinrichtung 6 erfasst durch die Banknote BN hindurchtretende Strahlung 7 in einem Winkel, der hinreichend unterschiedlich zu demjenigen Winkel ist, mit dem die Strahlung 2' im Wesentlichen geradlinig durch die Banknote BN hindurch verläuft. Prinzipiell reicht es für eine Dunkelfeldtransmissionsmessung gemäß der vorliegenden Erfindung jedoch aus, wenn ein dennoch erfasster Anteil der geradlinig verlaufenden Strahlung 2' derart stark abgeschwächt ist, dass er verglichen mit der erfassten gestreuten Strahlung 7 nur unwesentlich zum Messergebnis beiträgt.

Die Dunkelfeldtransmissionsmesseinrichtung 6 ist durch eine Datenleitung 8 mit einer Messeinrichtung 9 verbunden und bildet mit dieser zusammen eine Erfassungseinrichtung 10, die die durch die Banknote BN hindurchtretende elektromagnetische Strahlung 7 ortsaufgelöst im Dunkelfeld erfasst, d.h. als gerastertes bzw. pixelbasiertes Digitalbild. Über die Messeinrichtung 9 ist die Erfassungseinrichtung 10 über eine weitere Datenleitung 8 mit einer Auswerteeinrichtung 11 verbunden, z.B. mit einem Personalcomputer mit einer geeigneten Auswertesoftware, die die erfasste Strahlung 7 auswertet und die Banknote BN schließlich einer von zumindest zwei vorgegebenen Echtheitskategorien (z.B. "Echt" oder "Gefälscht/Verdächtig") zuordnet.

Die Echtheitsprüfungsvorrichtung 1 kann wiederum Bestandteil einer Banknotenbearbeitungseinrichtung sein (nicht dargestellt), welche eine beliebige Weiterbearbeitung der geprüften Banknote BN vornimmt. Von dieser können die Banknoten BN z.B. gezählt, abgestapelt, gemäß beliebigen Kriterien sortiert oder auf Umlauffähigkeit geprüft werden. Die Banknotenbearbeitungseinrichtung, die die erfindungsgemäße Echtheitsprüfungsvorrichtung 1 aufweist, kann eine Banknotenbearbeitungseinrichtung sein, die Banknoten nach ihrer Bearbeitung wieder ausgibt. Die Erfindung umfasst aber auch eine Banknotenbearbeitungseinrichtung mit der erfindungsgemäßen Echtheitsprüfungsvorrichtung 1, die einzuzahlende Banknoten BN entgegennehmen und abspeichern und/ oder auszuzahlende Banknoten BN ausgeben kann.

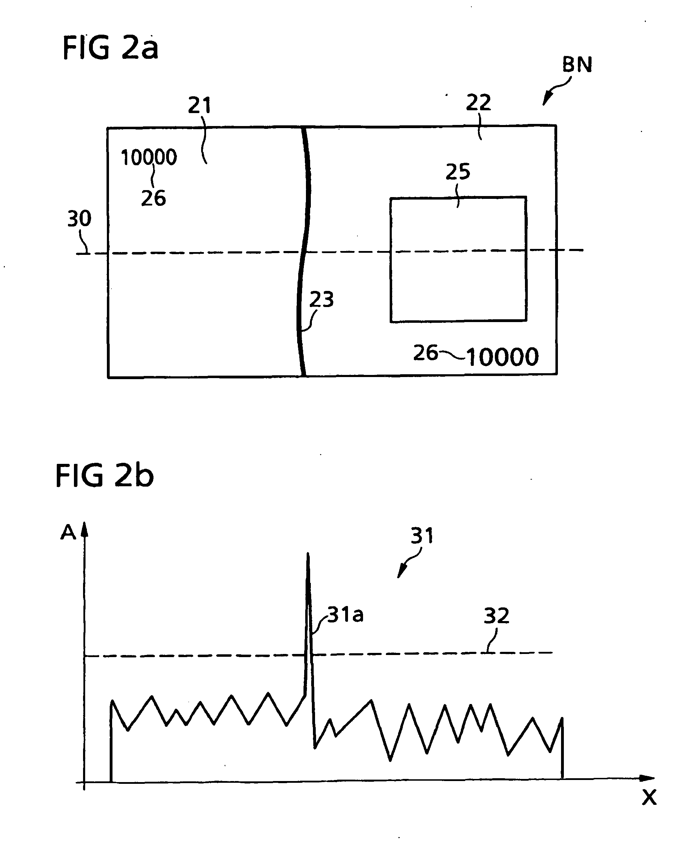

Figur 2a zeigt eine Composed-Fälschung einer Banknote BN, die aus einem gefälschten Banknotenteil 21 und einem echten Banknotenteil 22 besteht. Die Banknotenteile 21, 22 sind mit einem Kleber im Bereich der Trennlinie 23 zwischen den Banknotenteilen 21, 22 verbunden. Der Kleber kann z. B. in flüssiger Form aufgebracht und anschließend ausgehärtet sein und ist normalerweise transparent. Prinzipiell können Composed-Banknoten BN in beliebiger Art- und Weise aus gefälschten Banknotenteilen 21 und/oder echten Banknotenteilen 22 zusammengesetzt sein. Insbesondere können Composed-Banknoten BN auch aus mehr als zwei Banknotenteilen zusammengesetzt sein. Die Composed-Banknote BN der Fig. 2a ist mit einer Denominationsangabe 26 sowie mit einem Sicherheitsmerkmal 25 versehen. Weitere Sicherheitsmerkmale, wie z.B. Wasserzeichen, Sicherheitsfäden oder dergleichen, können zusätzlich vorhanden sein.

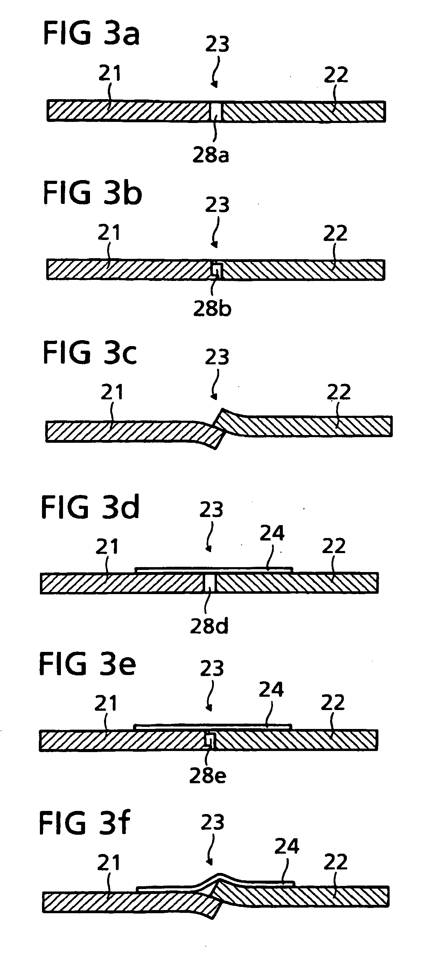

Figur 2b zeigt den Profilverlauf 31 der Intensität A der Dunkelfeldtransmission durch die Composed-Banknote BN der Fig. 2a entlang der strichlinierten Linie 30. Im Bereich der mit einem Kleber versehenen Trennlinie 23 ist ein deutliches Intensitätsmaximum 31a erkennbar, welches anhand eines Schwellenwertes 32 von sonstigen, z.B. rauschbedingten Intensitätsschwankungen der Dunkelfeldtransmission unterschieden werden kann. Das Maximum 31a ergibt sich daraus, dass der Kleber entlang der Trennlinie 23 die einfallende elektromagnetische Strahlung 2 wesentlich stärker streut, als das (Papier-) Substrat, aus dem die Banknotenteile 21, 22 bestehen. Dieser Effekt ist besonders gut im Dunkelfeld zu erkennen, z.B. bei den in Fig. 3 exemplarisch skizzierten Varianten von Composed-Fälschungen. In den Figuren 3a bis 3c sind die Banknotenteile 21, 22 der Composed-Banknote BN mit einem Kleber zusammengeklebt, wohingegen in den Figuren 3d bis 3f im Bereich der Trennlinie 23 ein Klebeband 24 aufgebracht ist, welches die Banknotenteile 21, 22 verbindet.

Infolge des Zusammenklebens einer Composed-Banknote BN mittels eines Klebers kann im Bereich 28a eine mit Kleber gefüllte Lücke zwischen den Banknotenteilen 21, 22 entstehen (Fig. 3a). Falls sich die Kanten der Banknotenteile 21, 22 berühren (Fig. 3b), ist dennoch aufgrund des in der Regel ungleichmäßigen Verlaufs dieser Kanten ein mit Kleber gefüllter Klebebereich 28b vorhanden. Sowohl bei dem in Fig. 3a als auch bei dem in Fig. 3b dargestellten Aufbau können die Klebebereiche 28a, 28b in einem Hellfeldtransmissionsbild nicht erkennbar sein. Dies ist dann der Fall, wenn sich die bei einer Hellfeldtransmissionsmessung gemessene Intensität in den Klebebereichen 28a, 28b nicht signifikant ändert. Da jedoch bei einem Kleber das Verhältnis zwischen Streuung und Absorption ein völlig anderes ist als bei homogenem Banknotenpapier, sind die Trennlinien 23 mittels einer Dunkelfeldtransmissionsmessung regelmäßig anhand der sich in den Bereichen 28a, 28b signifikant ändernden Streuung gut zu erkennen.

In Analogie dazu können sich beim Zusammenkleben mit einem Klebestreifen oder -band 24 (z.B. mit einem durchsichtigen Klebestreifen), wie in den Fig. 3d und 3e dargestellt, zwischen den Banknotenteilen 21, 22 Lückenbereiche 28d, 28e bilden, die möglicherweise sogar zusammen mit dem Klebeband 24 anhand der signifikanten Streuung mittels einer Dunkelfeldtransmissionsmessung erkannt werden können. Bei den in Fig. 3c und 3f im Querschnitt dargestellten Composed-Banknoten BN überlappen sich die Banknotenteile 21, 22. Auch diese Überlappungsbereiche werden anhand der signifikanten Streuung mittels einer Dunkelfeldtransmissionsmessung gut erkannt. Zudem wird auch ein über den Rand der Composed-Banknote BN hinausstehendes Klebeband 24 anhand einer signifikant höheren Streuung mittels einer Dunkelfeldtransmissionsmessung detektiert.

Bei allen zuvor dargestellten Beispielen ist der genaue Verlauf der Dunkelfeldtransmission im Bereich der Trennlinie 23 bzw. des Klebebands 24 abhängig von verschiedenen Faktoren, insbesondere von dem Frequenzbereich der eingestrahlten elektromagnetischen Strahlung 2, vom Material des verwendeten Klebers oder Klebebands 24 sowie von dem Material (z.B. Banknotenpapier) der Banknotenteile 21, 22. Bei Trennlinien 23 gemäß den in den Fig. 3a, 3b, 3d, 3e dargestellten Varianten ist verglichen mit den Banknotenteilen 21, 22 regelmäßig eine erhöhte Dunkelfeldtransmission festzustellen. Natürlich könnte es im Bereich der Trennlinien 23 der Fig. 3a, 3b, 3d, 3e auch zu einer vergleichsweise reduzierten Dunkelfeldtransmission kommen, z.B. bei ungewöhnlichen Banknotenmaterialien, wie z.B. Kunststoffsubstraten, oder dergleichen. Dementsprechend wird bei den Überlappungsbereichen der Trennlinien 23 der Fig. 3c und 3f normalerweise eine reduzierte Dunkelfeldtransmission festgestellt. In jedem Fall kann der zu erwartete Intensitätsverlauf der Dunkelfeldtransmission experimentell oder mittels Simulationsrechnungen bestimmt werden.

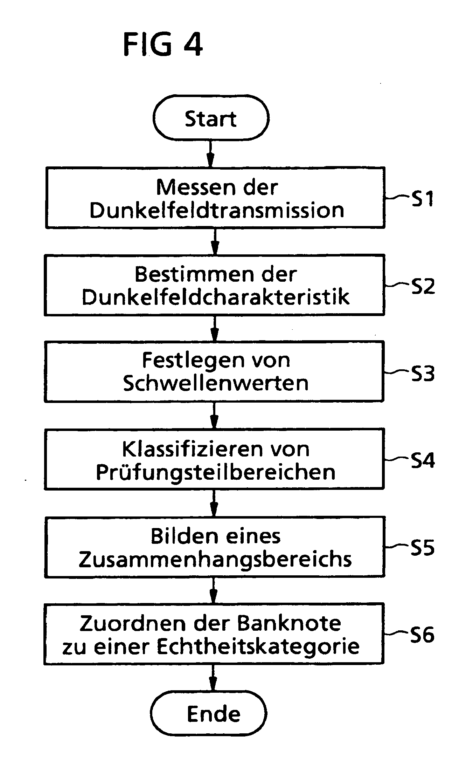

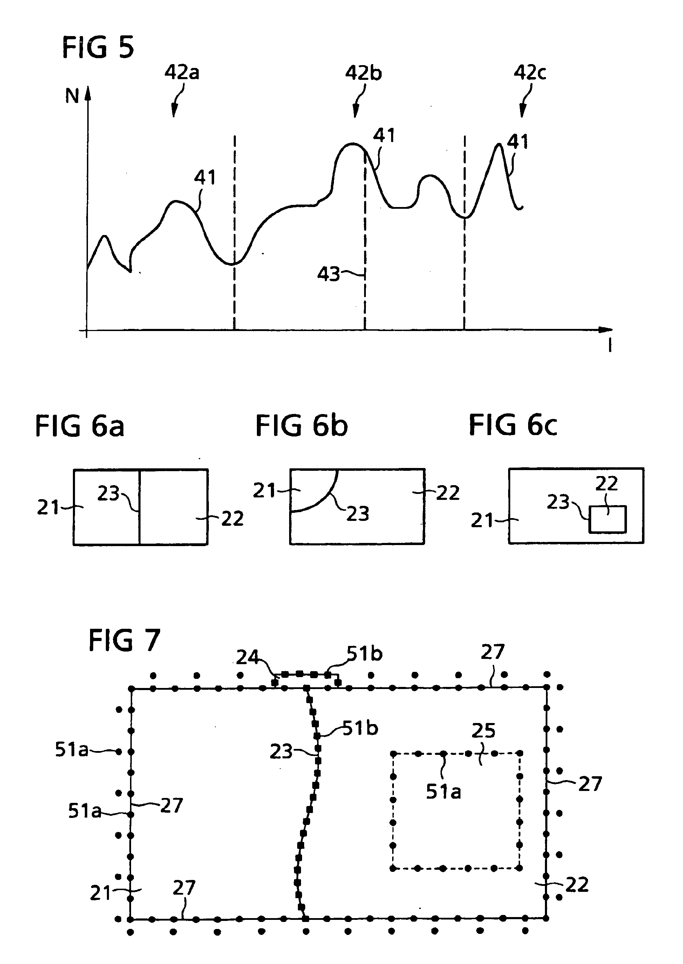

Fig. 4 zeigt schematisch die Schritte eines Verfahrens zum Erkennen von Composed-Banknoten BN, welches nachfolgend im Zusammenhang mit den Fig. 5 bis 7 erläutert wird.

Bei dem Verfahren gemäß Fig. 4 wird in einem ersten Verfahrensschritt S1 mit der zuvor im Zusammenhang mit Fig. 1 beschriebenen Erfassungseinrichtung 10 die Dunkelfeldtransmission einer Banknote BN ortsaufgelöst erfasst. Dabei werden für verschiedene Spektralbereiche Intensitätswerte A der Dunkelfeldtransmission ortsaufgelöst, d.h. örtlich gerastert bzw. ortsabgetastet, ermittelt. Anschließend wird die erfasste Dunkelfeldtransmission in den Verfahrensschritten S2 bis S6 mittels der Auswertungseinrichtung 11 ausgewertet. Im Verfahrensschritt S2 werden die für mindestens zwei verschiedene Spektralbereiche (z.B. für die Spektralbereiche "Grün" und "Infrarot") ortsaufgelöst erfassten Intensitätswerte A der Dunkelfeldtransmission ortsabhängig punktweise miteinander verknüpft (z.B. addiert oder multipliziert), um eine ortsaufgelöste Dunkelfeldcharakteristik C der Banknote BN zu bestimmen. Natürlich ist es möglich, die Intensitätswerte A der Dunkelfeldtransmission nur für einen Spektralbereich ortsaufgelöst zu erfassen und als Dunkelfeldcharakteristik C zu verwenden, wodurch das Verknüpfen der für verschiedene Spektralbereiche ortsaufgelöst erfassten Intensitätswerte A im Verfahrensschritt S2 entfallen würde. Alternativ oder zusätzlich können zur Bestimmung der Dunkelfeldcharakteristik C die Intensitätswerte A der Dunkelfeldtransmission auch mit ebenso ortsaufgelöst erfassten Werten einer Hellfeldtransmission, einer Reflektion oder einer sonstigen Messgröße verknüpft werden. In diesem Zusammenhang ist es auch denkbar, ergänzende Ultraschalltransmissionsmessungen heranzuziehen, um beispielsweise Klebestreifen 24 im Bereich eines Sicherheitsfadens besonders gut detektieren zu können. Zusätzlich ist es denkbar, unter UV-Beleuchtung emittiertes Fluoreszenzlicht mittels eines Fluoreszenzsensors zu detektieren.

Da signifikante banknotenabhängige Variationen der mittleren Dunkelfeldcharakteristik zu beobachten sind, hängt die Dunkelfeldcharakteristik C der Banknote BN stark von deren Gebrauchszustand ab, z.B. von Ausbleichungen und Abrieb. Deshalb werden die Schwellenwerte für jede zu prüfende Banknote BN anhand geeigneter Bezugsteilbereiche der betreffenden Banknote BN individuell festgelegt. Insofern werden im nachfolgenden Verfahrensschritt S3 innerhalb der Banknote BN mehrere geeignete Bezugsteilbereiche und basierend auf deren jeweiligen Ausschnitten aus der Dunkelfeldcharakteristik C der Banknote BN mehrere obere und/ oder untere Schwellenwerte bestimmt. Ein Bezugsteilbereich kann hierbei aus einem oder mehreren Pixeln bestehen, z.B. aus einer zusammenhängenden Gruppe von Pixeln des digitalen Bildes der Banknote BN, etwa aus einem lokalen Bereich, einer Spalte oder dergleichen.

Dabei können die oberen und unteren Schwellenwerte auf den lokalen Dunkelfeldcharakteristiken C verschiedener Bezugsteilbereiche basieren, z.B. indem Ordnungsoperatoren (z.B. Minimum, Maximum, Median) oder Verteilungsmomente (z.B. Mittelwert, Standardabweichung) auf zuvor ermittelte charakteristische Intensitätswerte der lokalen Dunkelfeldcharakteristiken C verschiedener Bezugsteilbereiche angewendet werden. Bei einem charakteristischen Intensitätswert einer lokalen Dunkelfeldcharakteristik C kann es sich z.B. um den Intensitätswert des entsprechenden einzelnen Pixels oder auch um einen Mittelwert, Median, oder dergleichen von mehreren Pixeln des betreffenden Bezugsteilbereichs handeln.

Alternativ oder zusätzlich zum Bestimmen der Schwellenwerte aufgrund der ortsaufgelösten Dunkelfeldcharakteristik C der Banknote BN kann auch der Typ der Banknote BN zur Schwellenwertberechnung herangezogen werden. Im einfachsten Fall können aus dem Typ der Banknote BN für diesen Typ vorgegebene Standardschwellenwerte berücksichtigt werden. Beispielsweise können derartig Standardschwellenwerte banknotenindividuell angepasst werden, z.B. basierend auf dem Unterschied zwischen charakteristischen Intensitätswerten (z.B. der mittleren Intensität) der Dunkelfeldcharakteristik C der zu prüfenden Banknote und einer Standardbanknote. Die Standardschwellenwerte kann dann abhängig von diesem Vergleich geeignet nach oben oder unten korrigiert werden, um die für die zu prüfende Banknote BN jeweils gültigen Schwellenwerte zu bestimmen. Auf diese Weise können basierend auf geeigneten Bezugsteilbereichen der zu prüfenden und der Standardbanknote für die zu prüfende Banknote global oder lokal gültige Schwellenwerte aus lokalen Standardschwellenwerten bestimmt werden.

Beispielsweise können anhand der in Fig. 5 illustrierten Histogramm-Analyse Schwellenwerte für vorgegebene Bezugsteilbereiche bestimmt werden. Bei dem Histogramm der Fig. 5 ist die Auftrittshäufigkeit N der verschiedenen charakteristischen Intensitätswerte I der Dunkelfeldcharakteristiken C von vorgegebenen Bezugsteilbereichen aufgetragen. Hierbei umfassen die Bezugsteilbereiche jeweils nur ein Pixel der Dunkelfeldcharakteristik C der Banknote BN, so dass der charakteristische Intensitätswert I der Bezugsteilbereiche genau dem Intensitätswert des jeweiligen Pixels entspricht. Zur Auswertung des Histogramms wird zunächst der Typ der Banknote BN bestimmt, welcher Aufschluss über verschiedene Druckbereiche der Banknote BN mit unterschiedlichen Intensitätsverteilungen gibt, z.B. Stahldruckbereiche, Helldruckbereiche oder Weißfeldbereiche. Die Pixel dieser Druckbereiche werden dann als Bezugsteilbereiche ausgewählt und dienen der Bestimmung der lokal für den betreffenden Druckbereich gültigen Schwellewerte. Die Prüfungsteilbereiche, auf die diese Schwellenwerte angewendet werden, entsprechen also hier genau den Bezugsteilbereichen, auf deren Grundlage die Schwellenwerte berechnet wurden.

Den jeweiligen Druckbereichen sind die Histograrnmausschnitte 42a, 42b, 42c zugeordnet, die die jeweils zu erwartenden Intensitätsverteilungen beschreiben. So ist z.B. der schwarz bis dunkle Histogrammbereich 42a den Stahldruckbereichen der Banknote zugeordnet und die Histogrammbereiche 42b und 42c den entsprechend helleren Helldruck- und Weißfeldbereichen. Für diese Zuordnung kann neben der konkreten Intensitätsverteilung der einzelnen Druckbereiche, die auf dem festgestellten Banknotentyp beruht, auch der Flächenanteil (d.h. die Anzahl der Pixel) des betreffenden Druckbereichs an (der Gesamtzahl der Pixel) der Banknote BN herangezogen werden.

Für jeden der Histogrammbereiche 42a, 42b, 42c werden dann lokale Schwellenwerte ermittelt, die für genau den betreffenden Druckbereich der Banknote BN gültig sind. Vorliegend wird beispielsweise für den Helldruckbereich der Banknote BN basierend auf dem zugeordneten Histogrammbereich 42b der Medianwert 43 als charakteristischer Intensitätswert bestimmt. Ein Intensitätswert eines Prüfungsteilbereichs in einem Helldruckbereich der Banknote BN, welcher von diesem charakteristischen Intensitätswert wesentlich nach oben oder unten abweicht (d.h. unterhalb einer unteren Schwelle oder oberhalb einer oberen Schwelle liegt), kann als Fälschungshinweis interpretiert werden, weshalb der betreffende Prüfungsteilbereich (bzw. das Pixel) einer entsprechenden Verdachtsklasse zuzuordnen ist.

Im Verfahrensschritt S4 werden dann zur weiteren Auswertung der in Schritt 1 erfassten elektromagnetischen Strahlung 7 Prüfungsteilbereiche 51a, 51b (vgl. z.B. Fig. 7) basierend auf deren jeweiliger Dunkelfeldcharakteristik C und den zuvor im Verfahrensschritt S3 festgelegten lokal gültigen oberen und unteren Schwellenwerten jeweils einer von mehreren Verdachtsklassen zugeordnet. Anhand der Verdachtsklassen wird unterschieden, ob ein charakteristischer Intensitätswert des jeweiligen Prüfungsteilbereichs 51a, 51b innerhalb eines Bereichs liegt, der auf die Echtheit der Banknote BN hindeutet, oder ob er über einem ersten (lokal gültigen) oberen Schwellenwert liegt, der den Echtheitsbereich nach oben abgrenzt, über weiteren (lokal gültigen) oberen Schwellenwerten liegt, die besonders starke Abweichungen vom Echtheitsbereich repräsentieren oder ob ein charakteristischer Intensitätswert des Prüfungsteilbereichs 51a, 51b unter entsprechenden (lokal gültigen) unteren Schwellenwerten liegt. Die so definierten Verdachtsklassen beschreiben also die Stärke, mit der die Dunkelfeldcharakteristik C des jeweiligen Prüfungsteilbereichs 51a, 51b auf eine Fälschung hindeutet. Bei dem charakteristischen Intensitätswert der Dunkelfeldcharakteristik C kann es sich auch hier z.B. um den Intensitätswert des entsprechenden einzelnen Pixels oder auch um einen Mittelwert, Median, oder dergleichen von mehreren Pixeln des Prüfungsteilbereichs 51a, 51b handeln.

Beim Schritt S4 können prinzipiell alle möglichen Prüfungsteilbereiche 51a, 51b bzw. Pixel einer Verdachtsklasse zugeordnet werden, um aus diesen anschließend den Zusammenhangsbereich zur form- oder lagebasierten Auswertung zu bilden. Aus Effizienzgründen können jedoch auch geeignete Vorprüfungen durchgeführt werden, indem z.B. ein Intensitätsmaximum aller Pixel einer jeden Spalte oder Zeile der Dunkelfeldcharakteristik C ermittelt wird und dann lediglich die Pixel derjenigen Spalten oder Zeilen einzeln einer Verdachtsklasse zugeordnet werden, deren Intensitätsmaximum einen vorgegebenen Schwellenwert überschreitet, da nur dort Hinweise auf eine Fälschung zu erwarten sind. Falls eine Spalte/Zeile also den vorgegebenen Schwellenwert überschreitet, werden die Intensitätswerte der Pixel dieser Spalte/ Zeile einzeln mit geeigneten lokalen oder globalen Schwellenwerten verglichen und anschließend einer passenden Verdachtsklasse zugeordnet. Falls eine Spalte/Zeile den vorgegebenen Maximalschwellenwert nicht überschreitet, werden alle Pixel der Spalte/Zeile einer Verdachtsklasse zugeordnet, die auf eine ungefälschte Banknote hindeutet.

In dem nachfolgenden Verfahrensschritt S5 werden im Wesentlichen zusammenhängende Prüfungsteilbereiche 51b, die zuvor Verdachtsklassen zugeordnet wurden, die auf eine Fälschung hindeuten, zu einem Zusammenhangsbereich zusammengefasst. Im einfachsten Fall, wenn alle Prüfungsteilbereiche (Pixel) 51a, 51b der betreffenden Banknote BN einer Verdachtsklasse zugeordnet wurden, werden Zusammenhangsbereiche aus im Wesentlichen zusammenhängenden Prüfungsteilbereichen (Pixeln) 51b gebildet, welche z. B. alle Verdachtsklassen zugeordnet wurden, die auf eine Fälschung hindeuten. In Schritt S6 wird dann anhand der Lage solcher Zusammenhangsbereiche, und ggf. auch anhand deren Form, entschieden, welcher Echtheitskategorie die Banknote BN zuzuordnen ist. Diese Auswertung kann auch für mehrere Spektralbereiche separat durchgeführt werden, wobei die separaten Endergebnisse, d.h. die ermittelten Zuordnungen der Banknote BN zu einer Echtheitskategorie, geeignet verknüpft werden müssen.

Die Kriterien dafür, aus mit welchen Verdachtsklassen verknüpften Prüfungsteilbereichen der Zusammenhangsbereich gebildet wird und wann die Prüfungsteilbereiche 51a, 51b als im Wesentlichen zusammenhängende zu betrachten sind, sind in der Regel fest vorgegeben, können aber auch vom Typ der geprüften Banknote BN abhängen und/oder auf Erfahrungswerten zuvor geprüfter Banknoten basieren, welche beispielsweise von einer Zentralstelle (z.B. einem zentralen Server) regelmäßig aktualisiert werden.

Ebenso kann, wie in Fig. 7 illustriert, zunächst eine zuvor bestimmte sinnvolle Menge von Prüfungsteilbereichen 51a, 51b einer Verdachtsklasse zugeordnet werden, um von dieser ausgehend weitere Prüfungsteilbereiche 51a, 51b derselben Verdachtsklasse zu suchen. Dies kann z.B. die am Rand der Banknote BN und/oder im Bereich eines Sicherheitselements 25 liegenden, z.B. das Sicherheitselement 25 umschließenden Prüfungsteilbereiche 51a, 51b betreffen. Die Prüfungsteilbereiche 51a, 51b der Fig. 7 bilden wieder vorzugsweise einzelne Pixel. In diesem Zusammenhang wird geprüft, ob sich aus denjenigen am Rand der Banknote BN liegenden Prüfungsteilbereichen 51b (Randpixeln), die einer auf eine Fälschung hindeutenden Verdachtsklasse zugeordnet wurden, ein linienförmiger oder zumindest nahezu linienförmiger Zusammenhangsbereich aus weiteren Prüfungsteilbereichen 51b (Pixeln) bilden lässt, die ebenfalls einer auf eine Fälschung hindeutenden Verdachtsklasse zugeordnet wurden oder zuzuordnen sind. Hierbei werden also gleichzeitig Prüfungsteilbereiche 51b Verdachtsklassen zugeordnet und ein Zusammenhangsbereich gebildet, so dass bei der Ausführungsform gemäß Fig. 7 die Schritte S4 und S5 kombiniert werden.

Auf diese Weise kann schrittweise und ressourceneffizient ein Zusammenhangsbereich im Bereich einer Trennlinie 23 und/oder in einem Bereich eines überstehenden Klebestreifens 24 detektiert werden und daraus in Schritt S6 auf eine Composed-Banknote BN geschlossen werden. In dem Verfahrensschritt S6 wird die Banknote BN schließlich einer Echtheitskategorie zugeordnet, z.B. der Kategorie "Echt", "Fälschung", "Verdächtig" oder weiteren nach Fälschungswahrscheinlichkeiten differenzierenden Echtheitskategorien.

Das Zuordnen zu einer Echtheitskategorie erfolgt abhängig von der Lage der ermittelten Zusainmenhangsbereiche und ggf. auch in Abhängigkeit von deren Form. Dabei deutet ein linienförmiger Verlauf eines Zusammenhangsbereichs aus Prüfungsteilbereichen 51b auf eine Trennlinie 23 einer Fälschung hin (vgl. Fig. 6a, 6b). Ebenso können geschlossene linienförmige Verläufe von Zusammenhangsbereichen innerhalb der Banknote BN als Trennlinien 23 einer Fälschung interpretiert werden (vgl. Fig. 6c), bei denen z.B. ein echtes Sicherheitselement 25 in ein gefälschtes Banknotensubstrat eingesetzt wurde.

Zusätzlich kann beim Zuordnen zu einer Echtheitskategorie auch die Anzahl der Prüfungsteilbereiche 51a, 51b berücksichtigt werden, die einer auf eine Fälschung hindeutenden Verdachtsklasse zugeordnet wurden. Hierbei können die einzelnen Prüfungsteilbereiche 51a, 51b unterschiedlich stark gewichtet werden, abhängig davon welche Fälschungswahrscheinlichkeit die betreffende Verdachtsklasse repräsentiert. Die Kriterien zum Zuordnen von Banknote BN zu bestimmten Echtheitskategorien, insbesondere die als Fälschung angesehenen Formen und Lagen von Zusammenhangsbereichen, sind häufig wertdokumentabhängig und können zudem einem sich ständig aktualisierenden Lernprozess unterliegen und/ oder der Echtheitserkennungsvorrichtung 1 von einem zentralen Server bereitgestellt werden.

Bei allen beschriebenen Varianten und Ausgestaltungen des erfindungsgemäßen Verfahrens ist es vernachlässigbar, welche Seite der Banknote BN in Richtung der Messeinrichtung 6 weist. Alle Varianten und Ausgestaltungen erlauben eine zuverlässige Erkennung von Composed-Banknoten und lassen sich z.B. auf Personalcomputern als Auswerteeinrichtung 11 implementieren.

## Patentansprüche

1. Verfahren zum Prüfen der Echtheit eines Wertdokuments (BN), umfassend ein Erfassen und Auswerten von durch das Wertdokument (BN) hindurchtretender elektromagnetischer Strahlung (7), **gekennzeichnet durch** die folgenden Schritte:
- Ortsaufgelöstes Erfassen zumindest einer Intensitätsverteilung der elektromagnetischen Strahlung (7) im Dunkelfeld, wobei die Intensitätsverteilung im Infrarotbereich und/oder im sichtbaren Spektralbereich und/oder im Ultraviolettbereich erfasst wird, und Bestimmen einer ortsaufgelösten Dunkelfeldcharakteristik aus der erfassten zumindest einen Intensitätsverteilung;
- Zuordnen von ausgewählten Prüfungsteilbereichen (51a, 51b) des Wertdokuments (BN) zu jeweils einer von mehreren vorgegebenen Verdachtsklassen in Abhängigkeit von einem Vergleich eines charakteristischen Intensitätswerts der Dunkelfeldcharakteristik des jeweiligen Prüfungsteilbereichs (51a, 51b) mit zumindest einem oberen und/oder unteren Schwellenwert;
- Bilden eines Zusammenhangsbereichs **durch** Zusammenfassen von im Wesentlichen zusammenhängenden Prüfungsteilbereichen (51a, 51b), die zuvor zumindest einer bestimmten Verdachtsklasse zugeordnet wurden;
- Zuordnen des Wertdokuments (BN) zu einer von zumindest zwei vorgegebenen, mit der zumindest einen bestimmten Verdachtsklasse verknüpften Echtheitskategorie in Abhängigkeit von einer Lage des Zusammenhangsbereichs innerhalb des Wertdokuments, wobei geprüft wird, ob der Zusammenhangsbereich eine von einer Seite zu derselben Seite verlaufende Trennlinie (23) oder eine von einer Seite zu einer anderen Seite des Wertdokuments (BN) verlaufende Trennlinie (23) oder eine den Rand eines Sicherheitselements (25) des Wertdokuments (BN) umlaufende Trennlinie (23) bildet.

2. Verfahren nach Anspruch 1, **dadurch gekennzeichnet, dass** die zumindest eine Intensitätsverteilung im Infrarotbereich und/ oder im grünen sichtbaren Spektralbereich erfasst wird.

3. Verfahren nach Anspruch 2, **dadurch gekennzeichnet, dass** in mehreren Spektralbereichen, vorzugsweise im Infrarotbereich und im grünen sichtbaren Spektralbereich, jeweils eine Intensitätsverteilung erfasst wird und die ortsaufgelöste DunkelfeIdcharakteristik aus den erfassten Intensitätsverteilungen bestimmt wird, indem einander entsprechende Werte der erfassten Interesitätsverteilungen verschiedener Spektralbereiche miteinander verknüpft werden.

4. Verfahren nach einem der vorhergehenden Ansprüche, **dadurch gekennzeichnet, dass** die ausgewählten Prüfungsteilbereiche (51a, 51b) in Abhängigkeit von zumindest einem lokal gültigen oberen und/oder unteren Schwellenwert und/oder zumindest einem global gültigen oberen und/oder unteren Schwellenwert jeweils einer Verdachtsklasse zugeordnet werden.

5. Verfahren nach einem der vorhergehenden Ansprüche, **dadurch gekennzeichnet, dass** der zumindest eine obere und/oder untere Schwellenwert in Abhängigkeit von Dunkelfeldcharakteristiken jeweils eines oder mehrerer Bezugsteilbereiche des Wertdokuments (BN) und/ oder in Abhängigkeit von einem vorgegebenen oberen und/oder unteren Standardschwellenwert festgelegt wird.

6. Verfahren nach Anspruch 5, **dadurch gekennzeichnet, dass** zum Festlegen des zumindest einen oberen und/oder unteren Schwellenwerts charakteristische Intensitätswerte der Dunkelfeldcharakteristiken verschiedener Bezugsteilbereiche des Wertdokuments (BN) arithmetisch miteinander verknüpft werden, vorzugsweise durch Mittelwertbildung.

7. Verfahren nach Anspruch 5 oder 6, **dadurch gekennzeichnet, dass** der zumindest eine obere und/ oder untere Schwellenwert festgelegt wird, indem ein oberer und/oder unterer Standardschwellenwert eines Standardwertdokuments nach oben korrigiert wird, falls ein aus den Dunkelfeldcharakteristiken der Bezugsteilbereiche abgeleiteter charakteristischer Intensitätswert über einem entsprechenden Standardintensitätswert des Standardwertdokuments liegt, oder nach unten korrigiert wird, falls der aus den Dunkelfeldcharakteristiken der Bezugsteilbereiche abgeleitete charakteristische Intensitätswert unter einem entsprechenden Standardintensitätswert des Standardwertdokuments liegt.

8. Verfahren nach einem der vorhergehenden Ansprüche, **dadurch gekennzeichnet, dass**
zumindest eine der Verdachtsklassen eine auf eine Fälschung des Wertdokuments (BN) hindeutende Verdachtsklasse ist,
wobei Prüfungsteilbereiche (51b) des Wertdokuments (BN), bei denen der charakteristische Intensitätswert der jeweiligen Dunkelfeldcharakteristik über einem oberen Schwellenwert liegt und/oder unter einem unteren Schwellenwert liegt, der auf eine Fälschung hindeutenden Verdachtsklasse zugeordnet werden und
aus solchen Prüfungsteilbereichen (51b), die der auf eine Fälschung hindeutenden Verdachtsklasse zugeordnet wurden, der Zusammenhangsbereich gebildet wird.

9. Verfahren nach einem der vorhergehenden Ansprüche, **dadurch gekennzeichnet, dass** zumindest ein Prüfungsteilbereich (51a, 51b) an einem Rand (27) des Wertdokuments (BN) oder an einem Rand eines Sicherheitselements (25) des Wertdokuments (BN) ausgewählt wird und einer Verdachtsklasse zugeordnet wird.

10. Verfahren nach Anspruch 9, **dadurch gekennzeichnet, dass** zumindest einer der ausgewählten Prüfungsteilbereiche (51a, 51b) ermittelt wird, welcher einer auf eine Fälschung hindeutenden Verdachtsklasse zugeordnet wurde, und ausgehend von diesem ermittelten Prüfungsteilbereich (51b) zumindest ein mit dem ermittelten Prüfungsteilbereich im Wesentlichen zusammenhängender Prüfungsteilbereich (51b) ermittelt wird, welcher ebenfalls einer auf eine Fälschung hindeutenden Verdachtsklasse zuzuordnen ist, wobei aus den ermittelten, im Wesentlichen zusammenhängenden Prüfungsteilbereichen (51b) der Zusammenhangsbereich gebildet wird.

11. Verfahren nach einem der vorhergehenden Ansprüche, **dadurch gekennzeichnet, dass** das Zuordnen des Wertdokuments (BN) zu einer von zumindest zwei vorgegebenen, mit der zumindest einen bestimmten Verdachtsklasse verknüpften Echtheitskategorie in Abhängigkeit von der Lage und in Abhängigkeit von einer Form des Zusammenhangsbereichs durchgeführt wird.

12. Verfahren nach einem der vorhergehenden Ansprüche, **dadurch gekennzeichnet, dass** abhängig von der Anzahl der Prüfungsteilbereiche (51b), die zuvor zumindest einer bestimmten Verdachtsklasse zugeordnet wurden, vorzugsweise einer auf eine Fälschung hindeutenden Verdachtsklasse, das Wertdokument (BN) einer vorgegebenen Echtheitskategorie zugeordnet wird, welche mit der zumindest einen bestimmten Verdachtsklasse verknüpft ist.

13. Vorrichtung (1) zur Echtheitsprüfung von Wertdokumenten (BN), umfassend eine Erfassungseinrichtung (10) und eine Auswertungseinrichtung (11) zum Erfassen und Auswerten von durch das Wertdokument (BN) hindurchtretender elektromagnetischer Strahlung (7), **dadurch gekennzeichnet, dass**
die Erfassungseinrichtung (10) eine Dunkelfeldtransmissionsmesseinrichtung (6) umfasst, die eingerichtet ist, zumindest eine Intensitätsverteilung der hindurchtretenden elektromagnetischen Strahlung (7) ortsaufgelöst im Dunkelfeld zu erfassen, wobei die Intensitätsverteilung im Infrarotbereich und/oder im sichtbaren Spektralbereich und/oder im Ultraviolettbereich erfasst wird; und
die Auswertungseinrichtung (11) eingerichtet ist, eine ortsaufgelöste Dunkelfeldcharakteristik aus der erfassten zumindest einen Intensitätsverteilung zu bestimmen, und
die Auswertungseinrichtung (11) eingerichtet ist, ausgewählte Prüfungsteilbereiche (51a, 51b) des Wertdokuments (BN) jeweils einer von mehreren vorgegebenen Verdachtsklasse zuzuordnen, in Abhängigkeit von einem Vergleich eines charakteristischen Intensitätswerts der Dunkelfeldcharakteristik des jeweiligen Prüfungsteilbereichs (51a, 51b) mit zumindest einem oberen und/oder unteren Schwellenwert, und
die Auswertungseinrichtung (11) eingerichtet ist, einen Zusammenhangsbereich zu bilden, indem im Wesentlichen zusammenhängenden Prüfungsteilbereiche (51a, 51b), die zuvor zumindest einer bestimmten Verdachtsklasse zugeordnet wurden, zu zumindest einem Zusammenhangsbereichs zusammengefasst werden; und
die Auswertungseinrichtung (11) eingerichtet ist, das Wertdokument (BN) einer von zumindest zwei vorgegebenen Echtheitskategorien zuzuordnen, welche mit der zumindest einen bestimmten Verdachtsklassen verknüpft ist, in Abhängigkeit von einer Lage des Zusammenhangsbereichs innerhalb des Wertdokuments, wobei geprüft wird, ob der Zusammenhangsbereich eine von einer Seite zu derselben Seite verlaufende Trennlinie (23) oder eine von einer Seite zu einer anderen Seite des Wertdokuments (BN) verlaufende Trennlinie (23) oder eine den Rand eines Sicherheitselements (25) des Wertdokuments (BN) umlaufende Trennlinie (23) bildet.

14. Vorrichtung (1) zur Echtheitsprüfung nach Anspruch 13, **dadurch gekennzeichnet, dass** die Vorrichtung eingerichtet ist, ein Verfahren nach einem der Ansprüche 2 bis 12 durchzuführen.

15. Bearbeitungseinrichtung für Wertdokumente (BN), **gekennzeichnet durch** eine Vorrichtung (1) zur Echtheitsprüfung von Wertdokumenten (BN) nach einem der Ansprüche 13 oder 14.

## Claims

1. A method for checking the authenticity of a value document (BN),
comprising a capturing and evaluating of electromagnetic radiation (7) passing through the value document (BN), **characterized by** the following steps:
- capturing in locally resolved fashion at least one intensity distribution of the electromagnetic radiation (7) in dark field, wherein the intensity distribution is captured in the infrared region and/or in the visible spectral region and/or in the ultraviolet region, and determining a locally resolved dark field characteristic from the at least one captured intensity distribution;
- assigning selected partial check regions (51a, 51b) of the value document (BN) to respectively one of several preset suspicion classes in dependence on a comparison of a characteristic intensity value of the dark field characteristic of the respective partial check region (51a, 51 b) with at least one upper and/or lower threshold value;
- forming an interrelation region by aggregating substantially interrelated partial check regions (51a, 51b) which have been previously assigned to at least one certain suspicion class;
- assigning the value document (BN) to one of at least two preset authenticity categories linked with the at least one certain suspicion class,
in dependence on a location of the interrelation region within the value document, wherein it is checked, whether the interrelation region forms a separating line (23) extending from one side to the same side or a separating line (23) extending from one side to a different side of the value document (BN) or a separating line (23) circumferentially extending around the margin of a security element (25) of the value document (BN).

2. The method according to claim 1, **characterized in that** the at least one intensity distribution is captured in the infrared region and/or in the green visible spectral region.

3. The method according to claim 2, **characterized in that** in several spectral regions, preferably in the infrared region and in the green visible spectral region, respectively one intensity distribution is captured and the locally resolved dark field characteristic is determined from the captured intensity distributions, by mutually corresponding values of the captured intensity distributions of different spectral regions being linked with each other.

4. The method according to any of the preceding claims, **characterized in that** the selected partial check regions (51a, 51b) are assigned, in dependence on at least one locally valid upper and/or lower threshold value and/or at least one globally valid upper and/or lower threshold value, to respectively one suspicion class.

5. The method according to any of the preceding claims, **characterized in that** the at least one upper and/or lower threshold value is specified in dependence on dark field characteristics of respectively one or several partial reference regions of the value document (BN) and/or in dependence on a preset upper and/or lower standard threshold value.

6. The method according to claim 5, **characterized in that** for specifying the at least one upper and/or lower threshold value characteristic intensity values of the dark field characteristics of different partial reference regions of the value document (BN) are arithmetically linked with each other, preferably by averaging.

7. The method according to claim 5 or 6, **characterized in that** the at least one upper and/or lower threshold value is specified by an upper and/or lower standard threshold value of a standard value document being corrected upward, if a characteristic intensity value derived from the dark field characteristics of the partial reference regions lies above a corresponding standard intensity value of the standard value document, or being corrected downward, if the characteristic intensity value derived from the dark field characteristics of the partial reference regions lies below a corresponding standard intensity value of the standard value document.

8. The method according to any of the preceding claims, **characterized in that**
at least one of the suspicion classes is a suspicion class indicating a forgery of the value document (BN),
partial check regions (51b) of the value document (BN), in which the characteristic intensity value of the respective dark field characteristic lies above an upper threshold value and/or below a lower threshold value, being assigned to the suspicion class indicating a forgery, and
of such partial check regions (51b) which have been assigned to a suspicion class indicating a forgery the interrelation region being formed.

9. The method according to any of the preceding claims, **characterized in that** at least one partial check region (51a, 51b) at a margin (27) of the value document (BN) or at a margin of a security element (25) of the value document (BN) is selected and assigned to a suspicion class.

10. The method according to claim 9, **characterized in that** there is ascertained at least one of the selected partial check regions (51a, 51b), which has been assigned to a suspicion class indicating a forgery, and starting out from this ascertained partial check region (51b) at least one partial check region (51b) substantially interrelated with the ascertained partial check region is ascertained, which also is to be assigned to a suspicion class indicating a forgery, from the ascertained, substantially interrelated partial check regions (51b) the interrelation region being formed.

11. The method according to any of the preceding claims, **characterized in that** the assigning of the value document (BN) to one of at least two preset authenticity categories linked with the at least one certain suspicion class is carried out in dependence on the location and in dependence on a form of the interrelation region.

12. The method according to any of the preceding claims, **characterized in that** depending on the number of partial check regions (51b) which have been previously assigned to at least one certain suspicion class, preferably to a suspicion class indicating a forgery, the value document (BN) is assigned to a preset authenticity category which is linked with the at least one certain suspicion class.

13. An apparatus (1) for checking the authenticity of value documents (BN), comprising a capture device (10) and an evaluation device (11) for capturing and evaluating electromagnetic radiation (7) passing through the value document (BN), **characterized in that**
the capture device (10) comprises a dark field transmission measuring device (6) which is adapted to capture at least one intensity distribution of the passing electromagnetic radiation (7) in dark field in locally resolved fashion, wherein the intensity distribution is captured in the infrared region and/or in the visible spectral region and/or in the ultraviolet region; and
the evaluation device (11) is adapted to determine a locally resolved dark field characteristic from the captured at least one intensity distribution, and the evaluation device (11) is adapted to assign selected partial check regions (51a, 51b) of the value document (BN) to respectively one of several preset suspicion classes, in dependence on a comparison of a characteristic intensity value of the dark field characteristic of the respective partial check region (51a, 51b) with at least one upper and/or lower threshold value, and
the evaluation device (11) is adapted to form an interrelation region by aggregating substantially interrelated partial check regions (51a, 51b), which have been previously assigned to at least one certain suspicion class, to at least one interrelation region; and
the evaluation device (11) is adapted to assign the value document (BN) to one of at least two preset authenticity categories which is linked with the at least one certain suspicion class, in dependence on a location of the interrelation region within the value document, wherein it is checked, whether the interrelation region forms a separating line (23) extending from one side to the same side or a separating line (23) extending from one side to a different side of the value document (BN) or a separating line (23) circumferentially extending around the margin of a security element (25) of the value document (BN).

14. The apparatus (1) for checking the authenticity according to claim 13, **characterized in that** the apparatus is adapted to carry out a method according to any of claims 2 to 12.

15. A processing device for value documents (BN), **characterized by** an apparatus (1) for checking the authenticity of value documents (BN) according to either of claims 13 to 14.

## Revendications

1. Procédé de vérification de l'authenticité d'un document de valeur (BN), comprenant une détection et une évaluation de rayonnement électromagnétique (7) traversant le document de valeur (BN), **caractérisé par** les étapes suivantes:
- détection en résolution locale d'au moins une répartition d'intensité du rayonnement électromagnétique (7) en champ sombre, la répartition d'intensité étant détectée dans le domaine infrarouge et/ou dans le domaine spectral visible et/ou dans le domaine ultraviolet, et détermination d'une caractéristique de champ sombre à résolution locale à partir de la au moins une répartition d'intensité détectée;
- affectation de zones partielles de vérification sélectionnées (51 a, 51 b) du document de valeur (BN) à respectivement une de plusieurs classes de suspicion données, en fonction d'une comparaison d'une valeur d'intensité caractéristique de la caractéristique de champ sombre de la zone partielle de vérification respective (51 a, 51 b) avec au moins une valeur seuil supérieure et/ou inférieure;
- formation d'une zone de contiguïté par regroupement de zones partielles de vérification essentiellement (51 a, 51 b) contiguës qui furent auparavant affectées à au moins une classe de suspicion déterminée;
- affectation du document de valeur (BN) à une d'au moins deux catégories d'authenticité données associées à la au moins une classe de suspicion déterminée, en fonction d'une position de la zone de contiguïté dans le document de valeur (BN), il étant vérifié si la zone de contiguïté forme une ligne de séparation (23) allant d'un côté au même côté ou une ligne de séparation (23) allant d'un côté à un autre côté du document de valeur (BN) ou une ligne de séparation (23) contournant le bord d'un élément de sécurité (25) du document de valeur (BN).

2. Procédé selon la revendication 1, **caractérisé en ce que** la au moins une répartition d'intensité est détectée dans le domaine infrarouge et/ou dans le domaine spectral visible vert.

3. Procédé selon la revendication 2, **caractérisé en ce que**, dans plusieurs domaines spectraux, de préférence dans le domaine infrarouge et dans le domaine spectral visible vert, respectivement une répartition d'intensité est détectée et **en ce que** la caractéristique de champ sombre à résolution locale est déterminée à partir des répartitions d'intensité détectées, ce qui a lieu **en ce que** des valeurs correspondant entre elles des répartitions d'intensité détectées de différents domaines spectraux sont associées les unes aux autres.

4. Procédé selon une des revendications précédentes, **caractérisé en ce que** les zones partielles de vérification sélectionnées (51 a, 51 b) sont affectées en fonction d'au moins une valeur seuil supérieure et/ou inférieure localement valable et/ou d'au moins une valeur seuil supérieure et/ou inférieure globalement valable de respectivement une classe de suspicion.

5. Procédé selon une des revendications précédentes, **caractérisé en ce que** la au moins une valeur seuil supérieure et/ou inférieure est fixée en fonction de caractéristiques de champ sombre de respectivement une ou plusieurs zones partielles de référence du document de valeur (BN) et/ou en fonction d'une valeur seuil standard supérieure et/ou inférieure donnée.

6. Procédé selon la revendication 5, **caractérisé en ce que**, pour la fixation de la au moins une valeur seuil supérieure et/ou inférieure, des valeurs d'intensité caractéristiques des caractéristiques de champ sombre de différentes zones partielles de référence du document de valeur (BN) sont associées arithmétiquement entre elles, de préférence par formation de la valeur moyenne.

7. Procédé selon la revendication 5 ou 6, **caractérisé en ce que** la au moins une valeur seuil supérieure et/ou inférieure est fixée, ce qui a lieu **en ce qu'**une valeur seuil standard supérieure et/ou inférieure d'un document de valeur standard est corrigée à la hausse si une valeur d'intensité caractéristique dérivée des caractéristiques de champ sombre des zones partielles de référence se situe au-dessus d'une valeur d'intensité standard correspondante du document de valeur standard, ou est corrigée à la baisse si la valeur d'intensité caractéristique dérivée des caractéristiques de champ sombre des zones partielles de référence se situe en-dessous d'une valeur d'intensité standard correspondante du document de valeur standard.

8. Procédé selon une des revendications précédentes, **caractérisé en ce que**
au moins une des classes de suspicion est une classe de suspicion laissant présumer une falsification du document de valeur (BN),
des zones partielles de vérification (51 b) du document de valeur (BN) dans lesquelles la valeur d'intensité caractéristique de la caractéristique de champ sombre respective se situe au-dessus d'une valeur seuil supérieure et/ou se situe en-dessous d'une valeur seuil inférieure étant affectées à la classe de suspicion laissant présumer une falsification et
la zone de contiguïté étant formée à partir de zones partielles de vérification (51 b) ayant été affectées à la classe de suspicion laissant présumer une falsification.

9. Procédé selon une des revendications précédentes, **caractérisé en ce qu'**au moins une zone partielle de vérification (51 a, 51 b) est sélectionnée à un bord (27) du document de valeur (BN) ou à un bord d'un élément de sécurité (25) du document de valeur (BN) et affectée à une classe de suspicion.

10. Procédé selon la revendication 9, **caractérisé en ce qu'**au moins une des zones partielles de vérification (51 a, 51 b) sélectionnées est identifiée, laquelle fut affectée à une classe de suspicion laissant présumer une falsification, et **en ce que**, sur la base de cette zone partielle de vérification (51 b) identifiée, au moins une zone partielle de vérification (51 b) essentiellement contiguë à la zone partielle de vérification identifiée est identifiée, laquelle est également à affecter à une classe de suspicion laissant présumer une falsification, la zone de contiguïté étant formée à partir des zones partielles de vérification (51 b) essentiellement contiguës identifiées.

11. Procédé selon une des revendications précédentes, **caractérisé en ce que** l'affectation du document de valeur (BN) à une d'au moins deux catégories d'authenticité données associée à la au moins une classe de suspicion déterminée est effectuée en fonction de la position et en fonction d'une forme de la zone de contiguïté.

12. Procédé selon une des revendications précédentes, **caractérisé en ce que**, en fonction du nombre des zones partielles de vérification (51 b) qui furent auparavant affectées à au moins une classe de suspicion déterminée, de préférence à une classe de suspicion laissant présumer une falsification, le document de valeur (BN) est affecté à une catégorie d'authenticité donnée qui est associée à la au moins une classe de suspicion déterminée.

13. Dispositif (1) de vérification de l'authenticité de documents de valeur (BN), comprenant un dispositif de détection (10) et un dispositif d'évaluation (11) pour la détection et l'évaluation de rayonnement électromagnétique (7) traversant le document de valeur (BN), **caractérisé en ce que**
le dispositif de détection (10) comprend un dispositif de mesure (6) de transmission en champ sombre qui est équipé pour détecter en champ sombre en résolution locale au moins une répartition d'intensité du rayonnement électromagnétique (7) traversant, la répartition d'intensité étant détectée dans le domaine infrarouge et/ou dans le domaine spectral visible et/ou dans le domaine ultraviolet; et
le dispositif d'évaluation (11) est équipé pour déterminer une caractéristique de champ sombre à résolution locale à partir de la au moins une répartition d'intensité détectée, et
le dispositif d'évaluation (11) est équipé pour affecter des zones partielles de vérification (51 a, 51 b) sélectionnées du document de valeur (BN) à respectivement une de plusieurs classes de suspicion données, en fonction d'une comparaison d'une valeur d'intensité caractéristique de la caractéristique de champ sombre de la zone partielle de vérification (51 a, 51 b) respective avec au moins une valeur seuil supérieure et/ou inférieure, et
le dispositif d'évaluation (11) est équipé pour former une zone de contiguïté, ce qui a lieu **en ce que** des zones partielles de vérification (51 a, 51 b) essentiellement contiguës qui furent auparavant affectées à un moins une classe de suspicion déterminée sont regroupées de manière à former au moins une zone de contiguïté; et
le dispositif d'évaluation (11) est équipé pour affecter le document de valeur (BN) à une d'au moins deux catégories d'authenticité donnée, laquelle est associée à la au moins une classe de suspicion déterminée, en fonction d'une position de la zone de contiguïté dans le document de valeur, il étant vérifié si la zone de contiguïté forme une ligne de séparation (23) allant d'un côté au même côté ou une ligne de séparation (23) allant d'un côté à un autre côté du document de valeur (BN) ou une ligne de séparation (23) contournant le bord d'un élément de sécurité (25) du document de valeur (BN).

14. Dispositif (1) de vérification d'authenticité selon la revendication 13, **caractérisé en ce que** le dispositif est équipé pour exécuter un procédé selon une des revendications de 2 à 12.

15. Dispositif de traitement pour documents de valeur (BN), **caractérisé par** un dispositif (1) de vérification d'authenticité de documents de valeur (BN) selon une des revendications 13 ou 14.
